# EUROPÄISCHE PATENTANMELDUNG

(11) **EP 2 832 690 A1**
(43) Veröffentlichungstag der Anmeldung: **04.02.2015**
(21) Anmeldenummer: 13179185.7
(22) Anmeldetag: 02.08.2013
(51) Int. Cl.: C01B 33/145, C01B 33/155, C01B 33/158

(54) **Verfahren zur Herstellung eines Aerogelmaterials**

(71) Anmelder: EMPA Eidgenössische Materialprüfungs- und Forschungsanstalt, 8600 Dübendorf (CH)
(72) Erfinder: Die Erfindernennung liegt noch nicht vor
(74) Vertreter: Schmauder & Partner AG Patent- & Markenanwälte VSP

(57) **Zusammenfassung**

Ein Verfahren zur Herstellung eines Aerogelmaterials, umfasst folgende Schritte:
a) Präparation eines Siliziumoxid-Sols in einem alkoholischen Lösemittelgemisch;
b) Gelierung des Sols, wobei ein Gel entsteht;
c) Hydrophobierung des gegebenenfalls gealterten Gels;
d) Entfernung des Lösemittelgemisches durch unterkritisches Trocknen, wobei das Aerogelmaterial gebildet wird.

Das im Schritt a) gebildete Siliziumoxid-Sol enthält mindestens ein säurekatalytisch aktivierbares Hydrophobierungsmittel, wobei der Volumenanteil des Hydrophobierungsmittels im Sol 3 bis 80% beträgt. Die Hydrophobierung in Schritt c) wird durch Freisetzung oder Zugabe mindestens eines mit dem Hydrophobierungsmittel zusammenwirkenden Hydrophobierungskatalysators eingeleitet.

## Beschreibung

### Technisches Gebiet

Die Erfindung betrifft ein Verfahren zur Herstellung eines Aerogelmaterials gemäss dem Oberbegriff des Anspruchs 1. Weiterhin betrifft die Erfindung eine aus einem Aerogelmaterial gebildete Dämmstoffplatte sowie ein Vorstufenprodukt zur Herstellung eines Aerogelmaterials.

### Stand der Technik

Aerogele finden vermehrt Anwendung in der Gebäudetechnik als hochdämmende Isolationsmaterialien. Zahlreiche Methoden zu deren Herstellung sind bekannt. Mit zunehmender Industrialisierung dieser Materialien seit der Jahrtausendwende werden die dabei verwendeten Herstellungsprozesse laufend vereinfacht. Grundlegend unterscheidet man zwischen Wasserglas (Natriumsilikat) und Alkoxid-basierten Verbindungen wie Tetraethylorthosilikat (TEOS) und Tetramethylorthosilikat (TMOS) als Silikatspender, welche die weiteren Syntheseschritte massgebend beeinflussen. Als Hydrophobierungsmittel oder Silylierungsreagenzien kommen hauptsächlich Hexamethyldisilazan (HMDS), Trimethylchlorsilan (TMCS) und Hexamethyldisiloxan (HMDSO) zum Einsatz.

Der kritische Schritt bei der Herstellung von Aerogelmaterialien ist das Trocknen eines nassen Gels. Traditionsgemäss verwendete man früher ausschliesslich die superkritische Trocknung, d.h. die Trocknung aus einem superkritischen Fluid (typischerweise niedere Alkohole oder später auch CO₂). Durch Lösemittel-Trocknung (unterkritische Trocknung) von hydrophobierten Gelen lassen sich Materialien mit quasi identischen Eigenschaften wie die superkritisch getrockneten Aerogele herstellen. Diese wurden in den Anfängen gemäss klassischer Definition Xerogele genannt, ein Begriff der auch heute noch für aus Lösemitteln getrocknete Aerogele verwendet wird. Wir benützen in der Folge die auf Materialeigenschaften (Dichte < 0.15g/cm³, Porosität >85%, Porengrösse 20 bis 80nm) basierte Definition auch für unterkritisch getrocknete Materialien und bezeichnen solche ebenfalls als Aerogele.

Hauptkostenpunkte dieser heute noch vergleichsweise teuren Isolationsmaterialien sind die aufwändige Prozessführung, Lösemittel, Lösemittelverluste und damit verbundene VOC Abgaben sowie Rohstoffe und Hydrophobierungsmittel. Die Entwicklung der Produktionsprozesse zielt auf Einsparungen bei allen erwähnten Punkten ab, wobei bis dato folgende Entwicklungsgeschichte durchlaufen wurde.

Ein frühes Patentdokument WO 1995/006617 A1 beschreibt die Verwendung von Wasserglas als kostengünstigem Silikatspender. Die Darstellung des Silikat-Gels erfolgt durch Neutralisation einer Wasserglaslösung mit Säure bis zu einem pH-Wert im Bereich 7.5 bis 11 und die darauffolgende Entfernung der im Gel enthaltenen Natriumionen durch Waschen mit Wasser. Ein Lösemittelaustausch der wässrigen Porenflüssigkeit nach Alkohol erlaubt die Trocknung durch Aufheizen in einem Autoklaven aus superkritischem Alkohol. Dieser Prozess ist sehr zeit- und energieintensiv. Zudem birgt das Arbeiten mit superkritischem Alkohol ein bedeutendes Sicherheitsrisiko aufgrund der verwendeten hohen Drücke und Temperaturen in Kombination mit der Brennbarkeit des Alkohols.

Ein wichtiger Durchbruch ist der vereinfachten Trocknung bei Normaldruck aus lösemittelhaltigen, hydrophobierten Gelen zu verdanken. Diese Methode wurde beispielsweise durch Anderson, Scherer und deren Mitarbeiter in der wissenschaftlichen Literatur beschrieben [J. Non. Cryst. Solids, 1995, 186, 104-112]. Das Verfahren wurde rasch bekannt und beflügelte neue Herstellungsprozesse für Silikat-Aerogele. Das Patent US 5,565,142 beschreibt ein solches Verfahren zur Herstellung.

WO 1998/005591 A1 betrifft ein Herstellungsverfahren für organisch modifizierte, permanent hydrophobe Aerogele. Gleich wie im Fall von WO 1995/006617 A1 wird das SiO₂-Gel ausgehend von einer Wasserglaslösung mittels Neutralisation durch Säure oder nach der Bildung eines Kieselsols durch lonentausch und anschliessender Basenzugabe gebildet. Der pH Wert während der Gelierung ist typischerweise im Bereich zwischen 4 und 8. Das nasse Gel wird in einem organischen Lösemittel gewaschen, bis der Wassergehalt unter 5% liegt und anschliessend hydrophobiert. Trocknung unter Normaldruck durch Verdampfen der Lösemittels lässt das Aerogelmaterial als Granulat zurück.

WO 2012/044052 A2 beschäftigt sich mit der Präparation von optisch transparentem und nicht-transparentem SiO₂-Aerogel in Granulatform. Hierfür wird ein Wasserglas-Sol in eine Alkoholphase eingespritzt, wobei sich in dieser das Gel in Form eines Granulats ausbildet. Das Gel wird des Weiteren mit Alkohol ausgetauscht und mittels eines Silylierungsreagens hydrophobiert. Anschliessend wird das Gel unter Normaldruck oder Unterdruck getrocknet. Das Verfahren erlaubt es, Aerogelgranulat mit deutlich geringerem Zeitaufwand zu produzieren, ein signifikanter Nachteil ist jedoch das Waschen mit Ethanol, welches benötigt wird um das Wasser aus der Hydrogelphase zu entfernen. Die Aufarbeitung des Wasser-Alkohol Gemisches benötigt grosse Mengen an Energie, was dieses Verfahren für eine grossindustrielle Fertigung stark benachteiligt.

Als für diese Erfindung zentral ist die Hydrophobierung von Alkogelen in einem Gemisch aus Hydrophobierungsmittel und Hydrophobierungskatalysator (HCl) zu erwähnen:

WO2013/053951 A1 beschreibt die Darstellung von Silikat Aerogelen und Xerogelen ausgehend von einem Alkoxid-basierten Sol. Dieses wird mittels Basenzugabe geliert und unter Rückflussieren in Alkohol gealtert. Das Gel wird dann in einer Lösung von Hydrophobierungsmittel, vorzugsweise HMDSO, und HCl als Katalysator ebenfalls unter Rückflussieren hydrophobiert und unterkritisch getrocknet. Diverse Ausprägungen der Trocknung werden im Detail beschrieben und deren Einfluss auf die Qualität der erhaltenen Materialien erläutert. Als zentraler Punkt ist die Zusammensetzung der Porenflüssigkeit vor dem Trocknen zu erwähnen, welche eine Mischung aus Alkohol und Hydrophobierungsmittel ist.

### Darstellung der Erfindung

Aufgabe der Erfindung ist es, ein verbessertes Verfahren zur Herstellung von Aerogelmaterialien anzugeben. Weitere Aufgaben bestehen darin, eine verbesserte Dämmstoffplatte sowie ein gebrauchsfertiges Vorstufenprodukt zur Herstellung eines Aerogelmaterials bereit zu stellen.

Diese Aufgaben werden erfindungsgemäss gelöst durch das Herstellungsverfahren gemäss Anspruch 1 sowie durch die Dämmstoffplatte nach Anspruch 14 und durch das Vorstufenprodukt nach Anspruch 15.

Das erfindungsgemässe Verfahren zur Herstellung eines Aerogelmaterials umfasst folgende Schritte:
a) Präparation eines Siliziumoxid-Sols in einem alkoholischen Lösemittelgemisch;
b) Gelierung des Sols, wobei ein Gel entsteht;
c) Hydrophobierung des gegebenenfalls gealterten Gels;
d) Entfernung des Lösemittelgemisches durch unterkritisches Trocknen, wobei das Aerogelmaterial gebildet wird;
wobei das im Schritt a) gebildete Siliziumoxid-Sol mindestens ein säurekatalytisch aktivierbares Hydrophobierungsmittel enthält, wobei der Volumenanteil des Hydrophobierungsmittels im Sol 3 bis 80% beträgt, und wobei die Hydrophobierung in Schritt c) durch Aktivierung oder Zugabe mindestens eines mit dem Hydrophobierungsmittel zusammenwirkenden Hydrophobierungskatalysators eingeleitet wird.

Bevorzugte Ausführungsformen werden nachfolgend erläutert und sind in den abhängigen Ansprüchen definiert.

Das erfindungsgemässe Verfahren erlaubt eine im Vergleich zu den bisher bekannten Verfahren wesentlich einfachere Herstellung von Silikat-Aerogelmaterialien. Dadurch, dass die Hydrophobierung ein säurekatalysierter Vorgang ist, d.h. durch H⁺ bzw. H₃O⁺ Ionen katalysiert wird, können der unter leicht basischen Bedingungen ablaufende Gelierungsprozess und der unter sauren Bedingungen ablaufende Hydrophobierungsprozess in ein und demselben Organogel zeitlich sauber voneinander getrennt durchgeführt werden. Als weiterer Vorteil zeichnet sich das erfindungsgemässe Verfahren durch einen deutlich reduzierten Lösemittelaufwand aus. Insbesondere gelingt es mit dem erfindungsgemässen Verfahren die zur Herstellung eines Aerogels verwendete Lösemittelmenge auf maximal das 1.1-fache des Gelvolumens zu beschränken. Aus dem Stand der Technik ist typischerweise mehr als das 2-fache des Gelvolumens an Lösemitteln nötig.

Unter alkoholischem Lösemittelgemisch wird in der vorliegenden Anmeldung ein Gemisch verstanden, das im Wesentlichen aus einem oder gegebenenfalls mehreren niederen Alkoholen (insbesondere Ethanol, Methanol, n-Propanol, Isopropanol, Butanole) und einem geeigneten Anteil an Hydrophobierungsmittel besteht. Es versteht sich, dass das Gemisch zudem einen geringen Anteil an Wasser, unvermeidbare Verunreinigungen und gegebenenfalls - wie anderswo erläutert - gewisse Zusatzstoffe enthalten kann.

Unter einem Hydrophobierungsmittel wird in an sich bekannter Weise eine Komponente verstanden, welche einer Oberfläche hydrophobe d.h. wasserabstossende Eigenschaften verleiht. In dieser Anmeldung bezieht sich das Hydrophobierungsmittel bzw. der Hydrophobierungsprozess primär auf das Silikatgel und die Modifikationen dessen Eigenschaften. Die mit dem erfindungsgemässen Verfahren herstellbaren Aerogelmaterialien können in Form von Granulat, monolithischen Körpern oder Kompositen produziert werden. Insbesondere können sie zur verfahrensmässig einfachen und damit auch wirtschaftlich vorteilhaften Bildung von Dämmstoffplatten eingesetzt werden.

Das erfindungsgemässe Verfahren umfasst das Gelieren eines Alkoxid basierten Silikat-Sols in einem alkoholischen Lösemittelgemisch, das mindestens ein katalytisch aktivierbares Hydrophobierungsmittel enthält.

Der Gelierungsprozess wird durch Zugabe einer verdünnten Base wie etwa Ammoniak ausgelöst. Optional wird das so gebildete Gel, welches auch als "Organogel" bezeichnet werden kann, noch einem Alterungsprozess unterworfen. Das gegebenenfalls gealterte Gel enthält nun alle zur Hydrophobierung und unterkritischen Trocknung gemäss WO2013/053951 A1 benötigten Komponenten oder genauer gesagt eine Porenflüssigkeit mit den Hauptkomponenten Alkohol und aktivierbares Hydrophobierungsmittel unter Ausnahme des Hydrophobierungskatalysators.

In der Folge gilt es, den Hydrophobierungskatalysator in kontrollierter Weise gänzlich ohne zusätzlichen Lösemitteleintrag oder mit minimalem Lösemitteleintrag in das Gel einzubringen. Gemäss einer bevorzugen Ausführungsform (Anspruch 2) wird als säurekatalytisch aktivierbares Hydrophobierungsmittel Hexamethyldisiloxan (HMDSO) eingesetzt.

Besonders vorteilhaft ist es (Anspruch 3), wenn der Volumenanteil des Hydrophobierungsmittels im Sol 5 bis 60%, insbesondere 20 bis 50%, insbesondere 25% bis 40% und insbesondere 34% bis 38% beträgt.

Es gibt verschiedene Möglichkeiten, um den Hydrophobierungskatalysator für den Schritt c) zuzugeben oder zu aktivieren.

Gemäss einer Ausführungsform wird der Hydrophobierungskatalysator durch einen radikalischen Zersetzungsprozess in Situ im Gel gebildet (Anspruch 4). Vorteilhafterweise wird der Hydrophobierungskatalysator durch radikalische Zersetzung von zuvor zugesetzten chlorhaltigen organischen Verbindungen wie etwa schwach oder nicht stabilisiertes PVC, Trichlormethan, Chloraceton oder Tetrachlorethylen gebildet. Damit lässt sich der Hydrophobierungskatalysator, bei dem es sich vorteilhafterweise um HCl handelt, zu einem gewünschten Zeitpunkt freisetzen, wobei dies entweder durch elektromagnetische Strahlung (UV, Röntgen) oder durch gängige Radikalstarter bewerkstelligt werden kann. Für Gele mit hoher optischer Transparenz und geringer Dicke sind photochemische radikalische Zersetzungsprozesse bevorzugt.

Gemäss einer weiteren Ausführungsform wird der Hydrophobierungskatalysator durch Slow-Release Agenzien im Gel freigesetzt, wobei die Freisetzung gegebenenfalls durch thermische Aktivierung ausgelöst oder beschleunigt wird (Anspruch 5). Vorzugsweise wird als Hydrophobierungskatalysator auch in diesem Fall HCl - beziehungsweise Vorläufer davon - verwendet, welches von im Sol enthaltenen "slow-release" oder "controlled-release" Additiven wie etwa Mikro-oder Nanokapseln oder Partikeln freigesetzt wird. Idealerweise erfolgt die Aktivierung dieser Agenzien über von aussen steuerbare Prozessparameter wie Druck, Temperatur oder elektromagnetische Strahlung (Licht, Radiowellen, Mikrowellen).

Gemäss einer weiteren Ausführungsform (Anspruch 6) wird als Hydrophobierungskatalysator HCl verwendet, welches gasförmig mit dem Gel in Kontakt gebracht wird. Dieses Verfahren eignet sich besonders zur Herstellung von Aerogelmaterialien mit hoher, exponierter, äusserer Oberfläche wie etwa kleine Objekte, Granulat und (mikro)strukturierte Monolithe oder Komposite.

Gemäss einer weiteren Ausführungsform (Anspruch 7) wird als Hydrophobierungskatalysator HCl oder TMCS oder eine Mischung dieser beiden Komponenten verwendet, welche in einer verdünnten Lösemittelmischung bestehend aus einer ähnlichen oder identischen Zusammensetzung wie der Porenflüssigkeit gelöst ist und in der Flüssigphase mit dem Gel in Kontakt gebracht wird. Die Menge an mit Katalysator beladener Lösung gemessen am Gelvolumen sollte erfindungsgemäss so klein als möglich gehalten werden, um den Vorteil einer möglichst geringen Lösemittelbilanz des erfindungsgemässen Verfahrens aufrecht zu erhalten. Vorzugsweise macht die katalysatorhaltige Lösung einen Volumenanteil von maximal 30% insbesondere maximal 10% aus.

Gemäss einer weiteren Ausführungsform (Anspruch 8) enthält das Sol weiterhin mindestens ein funktionales Silan. Je nach Wahl des Silans lassen sich die mechanischen Eigenschaften des Aerogels gezielt verändern, insbesondere dessen Flexibilität oder dessen Festigkeit.

Gemäss einer weiteren Ausführungsform (Anspruch 9) enthält das Sol weiterhin mindestens ein polymerisierbares Monomer, welches zur Bildung einer Polymerstruktur innerhalb des herzustellenden Aerogelmaterials befähigt ist. Vorteilhafterweise ist das polymerisierbare Monomer ausgewählt aus der Gruppe bestehend aus radikalpolymerisierbaren Substanzen wie Acrylate, Vinylchlorid, Styrol oder Divinylbenzol. Damit lässt sich insbesondere eine Verstärkung der Gelstruktur erreichen.

Gemäss einer weiteren Ausführungsform (Anspruch 10) wird der Schritt c) und/oder der Schritt d) in einem Druckgefäss bei einem Überdruck von beispielsweise bis zu 20 bar durchgeführt. Bei Normaldruck beträgt der Siedepunkt der Porenflüssigkeit zwischen 80 und 100°C. Das Arbeiten im Druckgefäss erlaubt es, analog dem Beispiel eines Dampfkochtopfs, den erfindungsgemässen Schritt c) bei deutlich höheren Temperaturen im Bereich 90-130°C durchführen zu können, was die Reaktionsgeschwindigkeit erhöht. Somit lässt sich die Hydrophobierungszeit drastisch reduzieren (beispielsweise von 24h bei 65°C auf nur 3h bei 90°C) was eine deutliche Effizienzsteigerung des Prozesses zur Folge hat. Gewünschtenfalls kann auch eine anfängliche Phase des Trocknungsschrittes d) bei erhöhtem Druck durchgeführt werden. Mit "anfänglicher Phase" ist im vorliegenden Zusammenhang ein an den Hydrophobierungsschritt c) anschliessender Teil des Trocknungsvorganges zu verstehen. Insbesondere versteht sich, dass gegen Ende des Gesamtprozesses in aller Regel ein Druckablass vorgenommen wird, nach welchem je nach Situation noch eine weitere Trocknung stattfinden kann.

Gemäss einer weiteren Ausführungsform (Anspruch 11) wird der Schritt d) bei Unterdruck durchgeführt. Das Trocknen im Vakuum hat den Vorteil, dass diese bei niederer Temperatur das heisst mit reduziertem Wärmeenergiebedarf und auf einem tieferen Temperaturniveau ablaufen kann. Insbesondere am Schluss der Trocknung erreicht man bei gleicher Temperatur durch Arbeiten im Vakuum eine geringere Menge an Lösemitteln (Restfeuchte) im Aerogelmaterial. Falls der vorangehende Hydrophobierungsschritt c) bei erhöhtem Druck durchgeführt wurde, kann die beim Einleiten des Trocknungsschrittes d) im heissen Gel gespeicherte thermische Energie benutzt werden, um die Trocknung anfänglich deutlich schneller ablaufen zu lassen, indem man ganz einfach das Ventil am Druckgefäss betätigt und somit die Porenflüssigkeit als Dampf ablässt.

Gemäss einer weiteren Ausführungsform (Anspruch 12) wird bei der Gelierung das Sol in eine faserbasierte Matrix zugegeben. Damit lassen sich in gezielter Weise strukturelle Verstärkungen in das Aerogelmaterial einbetten. In ähnlicher Weise lassen sich solche Verstärkungen durch Zugabe von Partikeln, insbesondere Nanopartikeln, oder Fasern und dergleichen herbeiführen.

Gemäss einer weiteren Ausgestaltung wird die Hydrophobierung zusätzlich über radikalische Prozesse katalysiert. Als Radikalkatalysatoren werden entweder aus der Polymerchemie bekannte Radikalstarter wie etwa AIBN (Azo-Isobutyronitril), tert-Butylhydroperoxid oder APS (Ammoniumpersulfat) verwendet oder aber die Radikale werden in situ durch elektromagnetische Strahlung (UV Licht) gebildet.

Die Präparation des Sols erfolgt auf der Stufe Labor meist in einem Batch Prozess d.h. durch Rühren eines Gemischs in einem ruhenden Gefäss. In einer technischen Anwendung wird das Sol bevorzugt in einem Durchflussreaktor kontinuierlich gebildet. Insbesondere werden also optional der Schritt a) sowie vorzugsweise die Schritte b) und c) des erfindungsgemässen Verfahrens in einem kontinuierlichen Prozess durchgeführt (Anspruch 13). Optional kann auch der Schritt d) in den kontinuierlichen Prozess integriert werden. Hydrophobierungsmittel und andere Additive (polymerisierbare Monomere, Fasern, Nanopartikel etc.) können zu unterschiedlichen Zeitpunkten in das Sol eingebracht werden, spätestens aber während der Gelierung. Durch die Abfolge und chemischen Parameter ergibt sich hier die Möglichkeit, neuartige Materialien mit genau einstellbaren physikalischen Eigenschaften zu kreieren.

Die katalytisch hydrophobierten Gele werden unterkritisch getrocknet. Das allgemeine Verfahren kann auf eine Reihe von Aerogelmaterialien angewendet werden, wobei je nach Anwendung reine Silikataerogele oder auch organisch modifizierte Aerogele wie etwa polymermodifizierte X-Aerogele oder Ormosil-Aerogele oder Hybride dieser Verbindungsklassen erhalten werden können.

Bezüglich Form und Art der verfahrensgemäss beschriebenen Aerogelmaterialien sind alle üblichen Ausgestaltungen (Granulat, Paneele, Platten, Decken ("blankets"), Beschichtungen, Filme) möglich.

Insbesondere lassen sich damit gemäss Anspruch 14 in vorteilhafter Weise Dämmstoffplatten herstellen.

Gemäss einem weiteren Aspekt der Erfindung wird gemäss Anspruch 15 ein Vorstufenprodukt zur Herstellung eines Aerogelmaterials bereitgestellt. Dieses beinhaltet ein Siliziumoxid-Sol und/oder ein Siliziumoxid-Gel in einem alkoholhaltigen Lösemittelgemisch und enthält zudem mindestens ein säurekatalytisch aktivierbares Hydrophobierungsmittel. Damit lässt sich in vorteilhafter Weise ein lager- und transportfähiges Ausgangsmaterial bereitstellen, das erst am gewünschten Einsatzort hydrophobiert und bei Bedarf getrocknet wird. Für Letzteres kommen grundsätzlich dieselben Verfahrensmöglichkeiten wie hier anderswo beschrieben in Frage.

### Wege zur Ausführung der Erfindung

Beispielhafte Ausführungsformen der Erfindung werden nachfolgend beschrieben.

### Herstellung eines Aerogelgranulats

Ein Siliziumoxid Sol-Konzentrat wird durch Hydrolyse von TEOS in Alkohol mit einem molaren TEOS/Wasser/Oxalsäure Verhältnis von 1:3.5:0.004 in Ethanol bei 50°C während 8 Stunden unter Rühren hydrolysiert. Der Silikatgehalt als SiO₂ berechnet im Sol-Konzentrat beträgt 18%. Das Sol Konzentrat wird nun auf die Endgültige Sol-Konzentration von 6% mit HMDSO und Ethanol so verdünnt, dass der HMDSO Gehalt im Sol 20% beträgt. Diesem Sol wird nun 1 % einer verdünnten, ethanolischen Ammoniaklösung zugegeben, was die Gelierung innerhalb von 7 Minuten zur Folge hat. Das frische Organogel wird bei 50°C während 2h im Block gealtert. Das gealterte Gel wird nun mechanisch zerkleinert und das Gelgranulat in einen geschlossenen Druckbehälter transferiert. Diesem wird nun eine Mischung aus HCl Gas und Stickstoff mit einem Überdruck von 2.5 Bar aufgepresst. Der Gefässinhalt wird dann innert 30 Minuten auf 100°C aufgeheizt. Das Gemisch wird nun während 90 Minuten hydrophobiert und danach auf 50°C abgekühlt und der Überdruck abgelassen. Das hydrophobierte Gel wird anschliessend auf einem Förderband zuerst bei 50°C vorgetrocknet (bis etwa 40% Trocknungsverlust) und danach bei 150°C getrocknet. Als Endprodukt wird ein hydrophobes Aerogelgranulat mit einer Rohdichte zwischen 0.08 und 0.12 g/cm³ erhalten, welches eine typische Wärmeleitfähigkeit im Material von 0.012 - 0.00145 W/(m K) aufweist. Als Granulatschüttgut von mittlerer Korngrösse von 3mm gemessen beträgt die Wärmeleitfähigkeit zwischen 0.019 - 0.0022 W/(m K).

### Industrielle Herstellung eines Aerogelgranulats

Ein Siliziumoxid Sol wird in einem Durchfluss-Rohrreaktor durch Hydrolyse von TEOS in Alkohol mit einem molaren TEOS/Wasser/Oxalsäure Verhältnis von 1:2.8:0.004 in Ethanol bei 75°C hydrolysiert, wobei die mittlere Verweilzeit in etwa eine Stunde beträgt. Dieses Sol wird nun im weiteren Verlauf des Rohrreaktors mit HMDSO und Ethanol so verdünnt, dass der HMDSO Gehalt im Sol 30% beträgt. Nun wird eine ethanolische Ammoniaklösung zudosiert, und die Mischung mittels statischem Mischer homogenisiert. Das Sol fliesst so auf ein auf 55°C temperiertes Gelierband, mit einer Verweilzeit von 25 Minuten. Dann wird das Gel in einem Brecher unter kontinuierlichem Zudosieren einer ethanolischen HCl Lösung in ein Granulat zerkleinert. Der Lösemittelfluss an ethanolischem Hydrophobierungskatalysator beträgt 10% des Gelvolumenstroms. Das Granulat wird nun in einem Druckdurchlaufbandreaktor auf 100°C erhitzt und kontinuierlich hydrophobiert und gleichzeitig vorgetrocknet. In einem zweiten Teil des Trocknungsbandes herrscht Normaldruck oder Unterdruck gegenüber Atmosphäre, und die Endtrocknungstemperatur beträgt 135°C. Als Endprodukt entsteht ein hydrophobes Aerogelgranulat mit einer Rohdichte zwischen 0.092 und 0.117 g/cm³ erhalten, welches eine typische Wärmeleitfähigkeit im Material von 0.013 - 0.0015 W/(m K) aufweist. Als Granulatschüttgut von mittlerer Korngrösse von 4mm gemessen beträgt die Wärmeleitfähigkeit zwischen 0.0195 - 0.0023 W/(m K).

In einer alternativen Ausführungsform wird das Gel ohne Lösemittel bzw. ohne Hydrophobierungskatalysator über dem Brecher gebrochen. Das Gel wird in einem Fallschacht in einem Luftstrom über einen Zeitraum von 3-5 Minuten als Granulatteilchen in Schwebung gehalten. Der Hydrophobierungskatalysator wird als gasförmiges HCl oder verdünnte ethanolische HCl Lösung von der Seite eingesprüht, wodurch alle Granulatpartikel gleichmässig mit dem Hydrophobierungskatalysator beaufschlagt werden. Alternativ zur zuvor beschriebenen Ausführung können Hydrophobierung und Trocknung auch in einem Zyklon-ähnlichen Fallschacht bzw. in einer Art Wirbelschichttrockner erfolgen.

### Herstellung eines Kompositmaterials

Ein Sol mit einem berechneten SiO₂ Gehalt von 5.2% wird durch Hydrolyse von TMOS in einer Mischung bestehend aus Methanol, Wasser und HMDSO mit den Volumenanteilen 65%, 8% und 27% in Gegenwart von 0.01 M HCl während 2h bei 65°C erhalten. Während der sauer katalysierten Hydrolyse agiert HMDSO bereits als Hydrophobierungsmittel, wobei ein partiell hydrophobes Sol entsteht. Diesem Sol werden nun 2% der Monomeren Methyl-Methacrylat sowie 0.5% eines radikalpolymerisierbaren Silan-Linkers 3-(Trimethoxysilyl)propyl-Methacrylat zugegeben, welche vorerst über Aluminiumoxid aktiviert worden waren (Entfernung des Inhibitors). Danach werden 0.35 Volumenprozent von Poly(Vinylchlorid-co-Vinylacetat) Mikropartikeln mit einer mittleren Teilchengrösse von 10µm in diese Mischung hineindispergiert. Zum Schluss werden 0.05% eines Radikalstarters tert-Butylhydroperoxid sowie 1% einer 1 M Ammoniaklösung bei 30°C zugegeben, das Sol während 1 Minute gerührt und anschliessend in eine Form gegossen. Nach der Gelierung wird das Gel bei 40°C während 4h gealtert. Danach werden die Gelkörper in ein geschlossenes druckfestes Gefäss gegeben und das Ganze auf 85-90°C erhitzt. Dabei wird ein Überdruck im Gefäss von rund 1atm registriert. Jetzt wird nach Erreichen der Temperatur der Radikalstarter aktiviert was zwei Prozesse gleichzeitig auslöst: Einerseits werden die PVC-haltigen Nanopartikel aktiviert und geben nun eine genau dosierte Menge des Hydrophobierungskatalysators HCl an das Gel ab. Damit wird die eigentliche Hydrophobierung mit HMDSO aktiviert. Gleichzeitig wir die Radikalpolymerisation der Methylmetacrylate ausgelöst. Dadurch werden Polymerketten ausgebildet, welche über die Trimethoxysilylgruppen direkt an das Silikatgerüst angeheftet sind. Dadurch ergibt sich eine Verstärkung des Gel-Netzwerks.

Nach 2h Inkubationszeit lässt man den Reaktor abkühlen und trocknet das modifizierte Gel während 2h bei 110°C. Am Ende wird ein polymerverstärktes, flexibles Aerogelkomposit mit einer Dichte von 0.15g/cm³ erhalten.

### Herstellung einer Dämmstoffplatte

200ml eines Polyethoxydisiloxan Sols mit 22% SiO₂ Gehalt werden mit je 150 ml Ethanol und 250ml HMDSO verdünnt. Diesem werden 4.0g eines mit 10% HCl dotierten Slow-Release Agens in Mikropartikelform zugegeben. Nach Zugabe von 2% einer 1 M Ammoniaklösung wird das gut durchmischte Sol in eine Form eingegossen, welche zuvor mit einer in Passform geschnittenen Polyestervlies-Fasermatte ausgelegt wurde. Innert 10 Minuten geliert die Mischung und bildet ein Gel im Innern der Faservliesmatrix. Nach einer Alterungsphase von 5h bei Raumtemperatur wird die Gelplatte vorsichtig aus der Form herausgehoben und in einem auf 65°C temperierten, geschlossenen Gefäss während 24h gelagert und hydrophobiert. Bei dieser erhöhten Temperatur tritt HCl aus der Mikroverkapselung aus und kann seine Eigenschaft als Hydrophobierungskatalysator für HMDSO gleichmässig im gesamten Volumen verteilt voll entfalten. Das Gefäss wird nun geöffnet und die Gelplatte zuerst bei 50°C und danach bei 130°C getrocknet. Die fertige Aerogeldämmstoffplatte hat eine Dichte von 0.14kg/cm³ und eine Wärmeleitfähigkeit von 0.0145mW/(m K).

## Patentansprüche

1. Verfahren zur Herstellung eines Aerogelmaterials, umfassend folgende Schritte:
a) Präparation eines Siliziumoxid-Sols in einem alkoholischen Lösemittelgemisch;
b) Gelierung des Sols, wobei ein Gel entsteht;
c) Hydrophobierung des gegebenenfalls gealterten Gels;
d) Entfernung des Lösemittelgemisches durch unterkritisches Trocknen, wobei das Aerogelmaterial gebildet wird;
**dadurch gekennzeichnet, dass** das im Schritt a) gebildete Siliziumoxid-Sol mindestens ein säurekatalytisch aktivierbares Hydrophobierungsmittel enthält, wobei der Volumenanteil des Hydrophobierungsmittels im Sol 3 bis 80% beträgt, und dass die Hydrophobierung in Schritt c) durch Freisetzung oder Zugabe mindestens eines mit dem Hydrophobierungsmittel zusammenwirkenden Hydrophobierungskatalysators eingeleitet wird.

2. Verfahren nach Anspruch 1, wobei das katalytisch aktivierbare Hydrophobierungsmittel Hexamethyldisiloxan (HMDSO) ist.

3. Verfahren nach Anspruch 1 oder 2, wobei der Volumenanteil des Hydrophobierungsmittels im Sol 5 bis 60% beträgt.

4. Verfahren nach einem der Ansprüche 1 bis 3, wobei der Hydrophobierungskatalysator durch einen radikalischen Zersetzungsprozess in Situ im Gel gebildet wird.

5. Verfahren nach einem der Ansprüche 1 bis 3, wobei der Hydrophobierungskatalysator durch Slow-Release Agenzien im Gel und gegebenenfalls durch thermische Aktivierung freigesetzt wird.

6. Verfahren nach einem der Ansprüche 1 bis 3, wobei der Hydrophobierungskatalysator gasförmiges HCl ist.

7. Verfahren nach einem der Ansprüche 1 bis 5, wobei der Hydrophobierungskatalysator Trimethylchlorsilan (TMCS) und/oder HCl in alkoholischer Lösung ist.

8. Verfahren nach einem der Ansprüche 1 bis 7, wobei das Sol weiterhin mindestens ein funktionales Silan enthält.

9. Verfahren nach einem der Ansprüche 1 bis 8, wobei das Sol weiterhin mindestens ein polymerisierbares Monomer enthält.

10. Verfahren nach einem der Ansprüche 1 bis 9, wobei der Schritt c) und gegebenenfalls eine anfängliche Phase des Schrittes d) bei Überdruck durchgeführt werden.

11. Verfahren nach einem der Ansprüche 1 bis 10, wobei der Schritt d) bei Unterdruck durchgeführt wird.

12. Verfahren nach einem der Ansprüche 1 bis 11, wobei bei der Gelierung das Sol in eine faserbasierte Matrix zugegeben wird.

13. Verfahren nach einem der Ansprüche 1 bis 13, wobei zumindest die Schritte b) und c) in einem kontinuierlichen Prozess durchgeführt werden.

14. Dämmstoffplatte, gebildet aus einem gemäss einem der Ansprüche 1 bis 13 hergestellten Aerogelmaterial.

15. Vorstufenprodukt zur Herstellung eines Aerogelmaterials, umfassend ein Siliziumoxid-Sol und/oder ein Siliziumoxid-Gel in einem alkoholhaltigen Lösemittelgemisch sowie mindestens ein säurekatalytisch aktivierbares Hydrophobierungsmittel enthaltend.
